# EUROPEAN PATENT APPLICATION

(11) **EP 4 726 927 A1**
(43) Date of publication of application: **15.04.2026**
(21) Application number: 25207495.0
(22) Date of filing: 08.10.2025
(51) Int. Cl.: H01R 4/02, H01R 4/20, H02G 5/10, H01R 43/02, H01R 43/048, B60L 53/302, H01R 4/60, H01R 11/12, B33Y 10/00, H01R 4/62, H01R 4/70, H01B 1/02

(54) **BUSBAR UNIT AND MANUFACTURING METHOD THEREOF**

(30) Priority: 10.10.2024 DE 102024129357
(71) Applicant: TE Connectivity Solutions GmbH, 8200 Schaffhausen (CH)
(72) Inventor: Ludwig, Michael, 8200 Schaffhausen (CH); Blümmel, Uwe, 8200 Schaffhausen (CH); Buresch, Isabell, 8200 Schaffhausen (CH)
(74) Representative: Patentanwaltskanzlei WILHELM & BECK

(57) **Abstract**

The invention relates to an aluminium busbar unit (100) for current transmission, comprising a busbar body (101), a stabilization structure (103) and a connecting unit (105) for the electrical and mechanical connection of the busbar unit (100), wherein the busbar body (101) comprises a cavity structure (107) with at least one cavity (109) running along a longitudinal axis (L) of the busbar body (101), wherein the stabilization structure (103) comprises at least one insertion element (111) which is at least partially inserted into the at least one cavity (109), wherein the stabilization structure (103) has a higher mechanical rigidity than the busbar body (101), and wherein the connecting unit (105) is secured at a connecting end (113) of the busbar body (101) by means of a press connection (115).

## Description

The invention relates to an aluminium busbar unit for current transmission.

Busbar units, in particular aluminium busbar units with cavity structures, are known from the prior art.

It is the object of the invention to provide an improved busbar unit with a cavity structure.

The object is achieved by the aluminium busbar unit of the independent claim. Advantageous refinements are the subject matter of the dependent claims.

According to one aspect, an aluminium busbar unit for current transmission is provided, comprising a busbar body, a stabilization structure and a connecting unit for the electrical and mechanical connection of the busbar unit, wherein the busbar body comprises a cavity structure with at least one cavity running along a longitudinal axis of the busbar body, wherein the stabilization structure comprises at least one insertion element which is at least partially inserted into the at least one cavity, wherein the stabilization structure has a higher mechanical rigidity than the busbar body, and wherein the connecting unit is secured at a connecting end of the busbar body by means of a press connection.

It is thereby possible to achieve the technical advantage that an improved aluminium busbar unit for current transmission can be provided. According to the invention, the aluminium busbar unit comprises a busbar body having a cavity structure with at least one cavity. The structural stability of the busbar body is greatly adversely affected by the cavity structure and the aluminium material of the busbar body.

The electrical connectability between the busbar body and the connecting unit, which is connected to the busbar body via the press connection, is thereby also greatly adversely affected since, because of the low structural stiffness, the busbar body yields greatly when the pressure for realizing the press connection is exerted, and therefore the quality of the cold welding between the connecting unit and the busbar body, which cold welding can be realized via the press connection, is reduced.

The stabilization structure according to the invention which has a higher mechanical rigidity than the busbar body makes it possible here, in particular by means of the at least one insertion element, which is at least partially inserted into the at least one cavity, to be able to reduce or prevent collapsing of the at least one cavity due to the pressure exerted for realizing the press connection. By means of the stiff stabilization structure, the mechanical rigidity of the busbar body can therefore be increased, at least in the region of the connecting end at which the connecting unit is intended to be connected to the busbar body via the press connection.

The increased rigidity and in particular the at least one insertion element, which is inserted into the at least one cavity, makes it possible for the busbar body in the region of the connecting end to more robustly counteract the pressure exerted by the press connection, as a result of which the quality of the cold welding between the busbar body and the connecting unit and, in association therewith, the electrical conductivity between the busbar body and the connecting unit can be improved.

Furthermore, the cavity structure in the busbar body makes it possible for a coolant to be inserted into the cavity structure for thermally cooling the busbar body during operation.

According to one embodiment, the cavity structure comprises a plurality of cavities.

This makes it possible to achieve the technical advantage that better penetration of the busbar body by the cavity structure can be brought about by the plurality of cavities of the cavity structure. When the cavity structure is filled with the coolant mentioned, this permits an improved cooling effect.

A volume of the cavity structure here can make up, for example, between 30 and 70% of the volume of the entire busbar body.

According to one embodiment, the stabilization structure comprises a plurality of insertion elements.

This makes it possible to achieve the technical advantage that a further stabilization or increase of the rigidity of the busbar body can be brought about by the plurality of insertion elements of the stabilization structure.

According to one embodiment, an insertion element is arranged in each of the cavities of the cavity structure.

This makes it possible to achieve the technical advantage that a further increase of the rigidity of the busbar body is made possible in the region of the connecting end. Since an insertion element is arranged in each cavity of the cavity structure, a fluid-tight closure of the busbar body by the stabilization structure can also be achieved. When the cavity structure is filled with the coolant, the coolant can thus be prevented from escaping.

According to one embodiment, the cavity structure comprises a through channel and a plurality of peripheral cavities arranged radially at least partially around the through channel.

This makes it possible to achieve the technical advantage that the busbar body is better penetrated by the cavity structure. The peripheral arrangement of the peripheral cavities around the through channel enables pressure to be uniformly distributed when the press connection is carried out.

According to one embodiment, the peripheral cavities at the connecting end of the busbar body are at least partially plastically deformed by the press connection, wherein the peripheral cavities are at least partially fluidically closed by the plastic deformation.

This makes it possible to achieve the technical advantage that additional sealing of the busbar body is brought about by the plastic deformation.

According to one embodiment, the at least one insertion element is inserted into the through channel.

This makes it possible to achieve the technical advantage that the insertion of the at least one insertion element into the through channel in turn enables pressure to be uniformly distributed better and, in association therewith, an improved press connection to be achieved.

According to one embodiment, the through channel is formed centrally in the busbar body.

This makes it possible to achieve the technical advantage that the central formation of the through channel in the busbar body in turn improves the distribution of pressure by means of the press connection. Since the through channel is positioned centrally and the peripheral cavities are positioned around the through channel, the cavity structure is constructed symmetrically and thus the distribution of pressure is directed uniformly onto the centre of the busbar body. This enables a uniform contact connection between the connecting unit and the busbar body to be achieved and asymmetrical deformation of the busbar body to be avoided.

According to one embodiment, the through channel has a larger cross section than the peripheral cavities.

This makes it possible to achieve the technical advantage that the smaller cross sections of the peripheral cavities make it possible to further increase the structural stability of the busbar body in the edge region. By this means, the press connection and the associated electrical contact connection between the busbar body and the connecting unit can be improved.

According to one embodiment, the at least one cavity has a cross section of the following shape: circular shape, elliptical shape, triangular shape, polygonal shape.

This makes it possible to achieve the technical advantage that optimum penetration of the busbar body by the cavity structure is made possible by the various cross sections of the cavities. When the cavity structure is filled with the coolant, the busbar body can furthermore be optimally cooled.

According to one embodiment, a cross section of the at least one insertion element has an identical shape and/or size to the cross section of the at least one cavity.

This makes it possible to achieve the technical advantage that a perfect fit of the insertion elements into the cavities is made possible by the insertion elements having cross sections of identical shape and/or identical size to the cavities. By this means, in turn, the structural rigidity of the busbar body can be improved and, when the cavity structure is filled with the coolant, the sealing of the cavity structure by the stabilization structure can be improved.

According to one embodiment, the at least one insertion element is bar-shaped.

This makes it possible to achieve the technical advantage that the bar-shaped design of the insertion elements makes it possible to better insert them into the corresponding cavities. The elongate design of the insertion element enables the insertion depth to be varied such that the structural stiffness of the busbar body can be increased by the insertion elements being correspondingly inserted via an expanded region at the connecting end.

According to one embodiment, the stabilization structure comprises a head structure connected to the at least one insertion element, wherein a diameter of the head structure is larger than the diameter of the at least one insertion element, and wherein the head structure lies against an end surface of the connecting end of the busbar body.

This makes it possible to achieve the technical advantage that the stability of the stabilization structure is improved by the head structure. If the stabilization structure comprises a plurality of insertion elements, the head structure makes it possible to insert the plurality of insertion elements into the respective cavities using one insertion process.

According to one embodiment, the stabilization structure at least partially fluidically closes the connecting end of the busbar body.

This makes it possible to achieve the technical advantage that a further improved fluidic sealing of the cavity structure is brought about.

According to one embodiment, the stabilization structure is manufactured from an electrically conductive material.

This makes it possible to achieve the technical advantage that a further improvement in the electrical contact connection between the busbar body and the connecting unit is brought about. The stabilization structure here is in mechanical and electrical contact both with the busbar body and with the connecting unit.

According to one embodiment, the stabilization structure is manufactured from a plastic and by a 3D printing method.

This makes it possible to achieve the technical advantage that simplified manufacturing of the stabilization structure is made possible by the assistance of the 3D printing method. This is advantageous in particular in a complex cavity structure with a plurality of variously configured cavities and a corresponding stabilization structure with a plurality of insertion elements.

According to one embodiment, a coolant for passively cooling the busbar body is formed in the at least one cavity of the cavity structure.

This makes it possible to achieve the technical advantage that passive cooling of the busbar body is made possible by the coolant. This makes it possible to remove heat arising during the conducting of current via the busbar body. This in turn improves the current conductivity of the busbar body.

According to one embodiment, the coolant is in the form of a phase change storage material.

This makes it possible to achieve the technical advantage that efficient removal of the heat arising in the busbar body during operation can be brought about by the phase change storage material. It can moreover be achieved that the correspondingly formed coolant can be provided within the cavity structure without mass transport.

According to one embodiment, the press connection is in the form of a crimping connection, and/or wherein the press connection is brought about by an EMPT (electromagnetic pulse technology) method.

This makes it possible to achieve the technical advantage that an efficient press connection which permits a robust mechanical connection and an efficient electrical connection between the busbar body and the connecting unit can be provided.

According to one embodiment, the connecting unit comprises a receiving sleeve, wherein the receiving sleeve is arranged around the connecting end of the busbar body, wherein the stabilization structure is held in the cavity structure by the receiving sleeve.

20.This makes it possible to achieve the technical advantage that a robust connection between the connecting unit and the busbar body is made possible. Since the stabilization structure is held in the cavity structure, the fluidic sealing of the cavity structure can be improved further. Furthermore, the mechanical and optionally electrical connection between the stabilization structure and the connecting unit is ensured by the receiving sleeve.

According to one embodiment, the receiving sleeve closes the connecting end of the busbar body fluidically with the cavity structure.

This makes it possible to achieve the technical advantage that a further improved fluidic sealing of the busbar body is brought about.

According to one embodiment, the connecting unit is in the form of a cable shoe.

This makes it possible to achieve the technical advantage that an efficient and widely usable connecting unit can be provided.

According to one embodiment, the connecting unit is manufactured from copper, and/or wherein the stabilization structure is manufactured from copper or steel.

This makes it possible to achieve the technical advantage that both the connecting unit and the stabilization structure can be provided with optimum electrical efficiency and a desired mechanical rigidity.

According to one embodiment, the receiving sleeve has two oppositely open ends, wherein the fluid-tight closing of the busbar body is brought about via the head structure of the stabilization structure.

This makes it possible to achieve the technical advantage that a technically simple connecting unit can be used, and that nevertheless a fluid-tight closing of the busbar body is made possible.

According one aspect, a method for manufacturing a busbar unit according to any one of the preceding embodiments is provided, comprising:
providing a busbar body (101) with a cavity structure and a stabilization structure;
inserting at least one insertion element of the stabilization structure into at least one cavity of the cavity structure;
axially covering a connecting end of the busbar body by a connecting unit; and securing the connecting unit to the busbar body via a press connection.

By this means, an improved method for manufacturing a busbar unit having the above-described technical advantages can be provided.

According to one embodiment, the method furthermore comprises:
filling the at least one cavity with a phase change material.

This makes it possible to achieve the technical advantage that cooling of the busbar body is achieved by the phase change material.

According to one embodiment, a counterforce directed axially counter to a compression force of the press connection is provided by the stabilization structure.

This makes it possible to improve the press connection and has the effect that, because of the more robust structure of the busbar body and the stabilization structure, a cold welding, which is brought about by the press connection, between the busbar body and the connecting unit is improved.

The invention is explained in more detail below with the aid of the figures, in which:
- Figure 1: shows a schematic illustration of an aluminium busbar unit according to one embodiment,
- Figure 2: shows a further schematic illustration of an aluminium busbar unit according to a further embodiment,
- Figure 3: shows a schematic illustration of a busbar body of an aluminium busbar unit according to one embodiment,
- Figure 4: shows a schematic illustration of a busbar body with a stabilization structure of an aluminium busbar unit according to one embodiment,
- Figure 5: shows a schematic sectional illustration of an aluminium busbar unit according to one embodiment,
- Figure 6: shows several schematic sectional illustrations of an aluminium busbar unit according to several embodiments, and
- Figure 7: shows a perspective schematic illustration of two aluminium busbar units according to one embodiment.

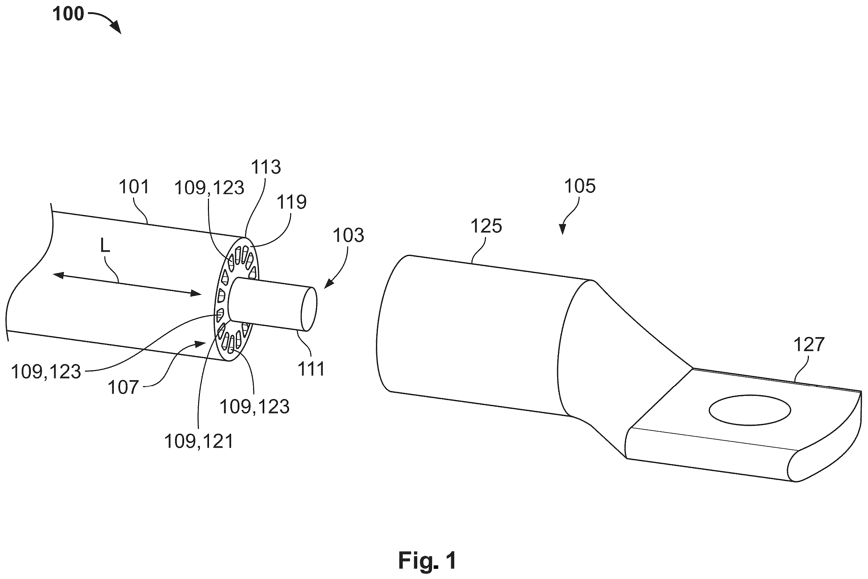

Figure 1 shows a schematic illustration of an aluminium busbar unit 100 according to one embodiment.

According to the invention, the aluminium busbar unit 100 comprises a busbar body 101, a stabilization structure 103 and a connecting unit 105. In the embodiment shown, the busbar body 101 is cylindrical and comprises a connecting end 113 with an end surface 119.

Furthermore, a cavity structure 107 with at least one cavity 109 is formed in the busbar body 101. The at least one cavity 109 extends here along a longitudinal axis L of the busbar body 101.

In the embodiment shown, the cavity structure 107 comprises a plurality of cavities 109.

In the embodiment shown, the cavity structure 107 comprises a through channel 121 and a plurality of peripheral cavities 123 arranged around the through channel 121. In the embodiment shown, the through channel 121 is formed centrally in the busbar body 101.

According to the invention, the stabilization structure 103 comprises at least one insertion element 111 which is at least partially inserted into at least one cavity 109 of the cavity structure 107.

According to the invention, the stabilization structure 103 has a higher mechanical hardness and/or rigidity than the busbar body 101.

In the embodiment shown, the insertion element 111 is bar-shaped. Furthermore, the at least one insertion element 111 is inserted into the central through channel 121.

For better illustration in Figure 1, the insertion element 111 shown is not completely pushed into the through channel 121 and protrudes over the end surface 119 of the connecting end 113 of the busbar body 101. However, the insertion element 111 can also be pushed completely into the respective cavity 109 and can end in alignment with the end surface 119 of the connecting end 113.

In the embodiment shown, the connecting unit 105 comprises a receiving sleeve 125 and a coupling element 127. The connecting unit 105 can be pushed onto the busbar body 101 via the receiving sleeve 125.

According to the invention, the connecting unit 105 is connected to the busbar body 101 via a press connection. For better illustratability, in Figure 1 the busbar body 101 and the connecting unit 105 are shown in an unconnected state.

By means of the stabilization structure 103 and in particular the at least one insertion element 111, which is positioned in at least one cavity 109 of the cavity structure 107, the structural strength of the busbar body 101 in the region of the connecting end 113 can be increased, and therefore an improved press connection and an improved mechanical and electrical contact connection between the busbar body 101 and the receiving sleeve 125 of the connecting unit 105 can be brought about. In the embodiment shown, the connecting unit 105 is in the form of a cable shoe.

According to one embodiment, the stabilization structure 103 including the insertion element 111 can be formed from an electrically conductive material, for example copper or steel. As an alternative thereto, the stabilization structure 103 can be manufactured from a plastic using a 3D printing method.

According to one embodiment, the cavities 109 of the cavity structure are filled with a coolant for providing passive cooling of the busbar body 101. The coolant can be in the form, for example, of a phase change material. Figure 1 shows the busbar body 101 without a coolant, for illustrative reasons.

In the embodiment shown, the receiving sleeve 125 of the connecting unit 105 is designed as a sleeve closed on one side. When the connecting unit 105 is positioned on the busbar body 101 and the connecting unit 105 is fixed to the busbar body 101 by means of the press connection mentioned, the receiving sleeve 125 can therefore be configured to fluidically seal the busbar body 101 and the cavity structure 107 formed therein.

According to one embodiment, the press connection, by means of which the receiving sleeve 125 of the connecting unit 105 is connected to the busbar body 101, is in the form of a mechanical crimping connection. Alternatively, the press connection can be brought about via an EMPT - electromagnetic pulse energy technology - method.

According to one embodiment, the insertion element 111 can be designed in such a way that simple insertion into the cavity 109 is made possible. For example, the insertion element 111 can be conical or can comprise insertion aids, by means of which the insertion element 111 can be pushed into the cavity 109.

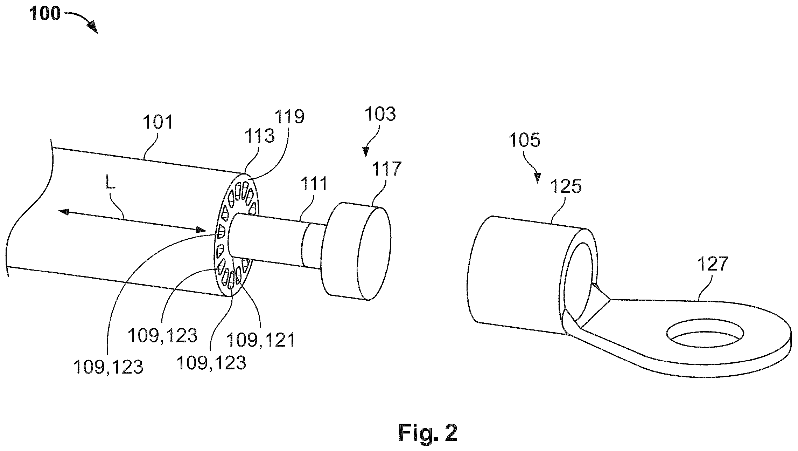

Figure 2 shows a further schematic illustration of an aluminium busbar unit 100 according to a further embodiment.

The embodiment in Figure 2 is based on the embodiment in Figure 1.

In the embodiment shown, the stabilization structure 103 furthermore comprises a head structure 117 connected to the at least one insertion element 111. The head structure 117 here comprises a larger diameter than the at least one insertion element **111** and is configured here to cover the end surface 119 of the connecting end 113 of the busbar body 101 when the at least one insertion element **111** is completely inserted into the respective cavity 109.

Fluidic sealing of the busbar body 101 and in particular of the cavity structure 107 can thus be brought about via the head structure 117 of the stabilization structure 103.

In the embodiment shown, the receiving sleeve 125 of the connecting unit 105 is designed as an open sleeve with two open ends.

The embodiment of the stabilization structure 103 in Figure 2 can also be combined with the embodiment of the connecting unit 105 of Figure 1.

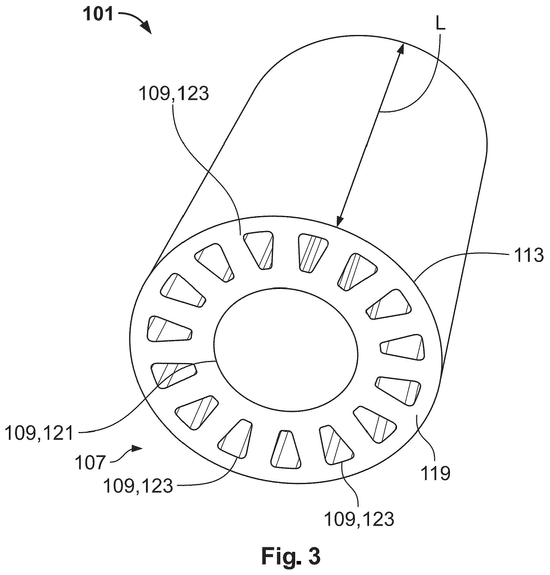

Figure 3 shows a schematic illustration of a busbar body 101 of an aluminium busbar unit 100 according to one embodiment.

Figure 3 clearly illustrates the cavity structure of the embodiments of Figures 1 and 2. The through channel 121 is formed centrally in the busbar body 101 and the peripheral cavities 123 are positioned circumferentially around the central through channel 121.

In the embodiment shown, the through channel 121 has a circular cross section. By contrast, the plurality of peripheral cavities 123 have a trapezoidal cross section within the broadest meaning. Furthermore, the through channel 121 is formed with a substantially larger cross section than the peripheral cavities 123 are.

The number and arrangement or the size ratios between the peripheral cavities 123 and the through channel 121 shown are merely by way of example and may differ from the example shown.

When the press connection is carried out to fix the connecting unit 105 to the busbar body 101, the peripheral cavities 123 of the cavity structure 107 can be partially plastically deformed because of the pressure being exerted on the receiving sleeve 125 to bring about the press connection. By means of the plastic deformation, the peripheral cavities 123 can be at least partially fluidically closed here.

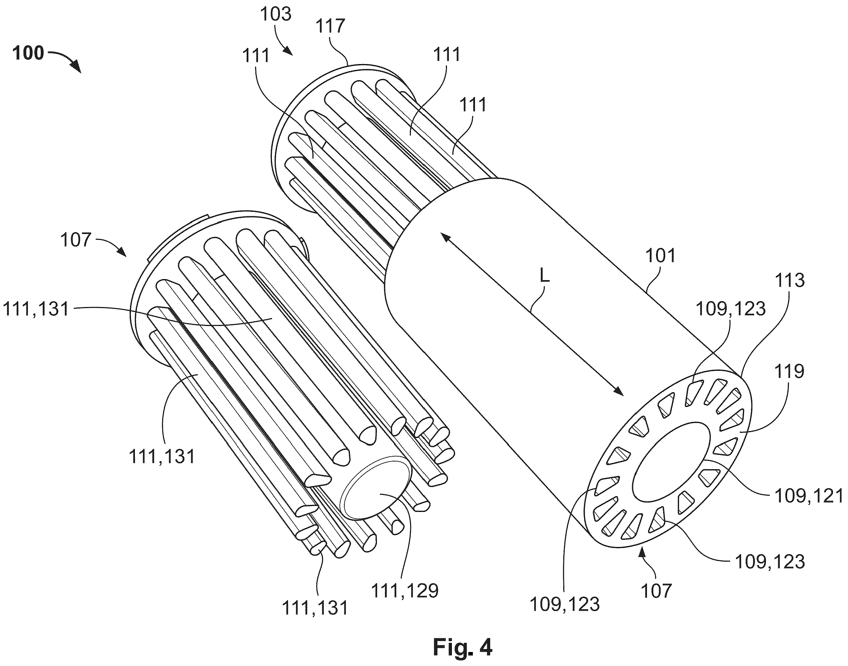

The busbar body 101 shown in Figure 4 corresponds to the embodiment in Figure 3.

A further embodiment of the stabilization structure 103 is furthermore shown next to the busbar body 101. The stabilization structure 103 shown comprises a plurality of insertion elements 111. The insertion elements 111 are correspondingly bar-shaped here and fixed to the plate-like head structure 117 shown.

In the embodiment shown, the stabilization structure 103 has a central insertion element 129, which is positioned centrally on the plate-like head structure 117, and a plurality of peripheral insertion elements 131 arranged encircling the central insertion element 129.

The arrangement of the plurality of insertion elements 111 corresponds here to the arrangement of the plurality of cavities 109 of the cavity structure 107. The stabilization structure 103 has a corresponding insertion element 111 here for each cavity 109 of the cavity structure 107.

The insertion elements 111 are designed here in such a way that the cross sections of the insertion elements 111 correspond in shape and size to the cross sections of the cavities 109 of the cavity structure 107. The central insertion element 129 is designed here correspondingly to the through channel 121 with a larger circular cross section than the peripheral insertion elements 131, analogously to the peripheral cavities 123.

Figure 4 shows a schematic illustration of a busbar body 101 with a stabilization structure 103 of an aluminium busbar unit 100 according to one embodiment.

As cannot be seen immediately from Figure 4, the peripheral insertion elements 131 have substantially trapezoidal cross sections analogously to the peripheral cavities 123.

In the embodiment shown, the stabilization structure 103 is manufactured from plastic by means of a 3D printing method. In complex stabilization structures 103 with a multiplicity of variously designed insertion elements 111, the 3D printing method can be an advantageous manufacturing method here.

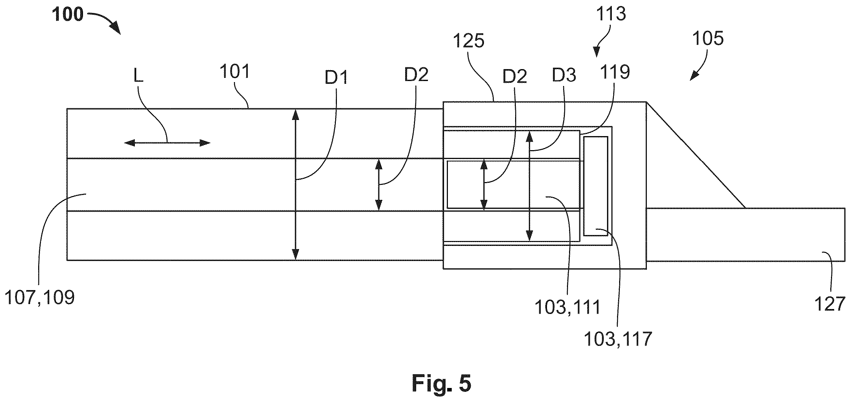

Figure 5 shows a schematic sectional illustration of an aluminium busbar unit 100 according to one embodiment.

Figure 5 shows the aluminium busbar unit 100 according to the invention in the assembled state. For this purpose, the stabilization structure 103 is formed at the connecting end 113 of the busbar body 101. In the embodiment shown, the cavity structure 107 comprises just one cavity 109 for simpler illustratability. Accordingly, the stabilization structure 103 likewise has just one insertion element 111 inserted into the one cavity 109. In the embodiment shown, the stabilization structure 103, according to the embodiments of Figures 2 and 4, has a head structure 117. The insertion element 111 is completely inserted into the cavity 109 such that the head structure 117 bears against the end surface 119 of the connecting end 113 of the busbar body 101 and thus fluidically closes the cavity structure 107.

In the illustration shown, the busbar body 101 has a diameter D1 while the one cavity 109 illustrated has a diameter D2.

In the region of the connecting end 113, in which the receiving sleeve 125 is connected to the busbar body 101 via the press connection, the diameter D1 of the busbar body 101 is compressed to a reduced diameter D3 because of the axial pressure, which is required for bringing about the press connection, on the receiving sleeve 125.

By means of the insertion of the insertion element 111 into the at least one cavity 109, the diameter D2 of the cavity 109 is very substantially unaffected by the press connection and plastic deformation of the cavity 109 does not occur because of the insertion element 111.

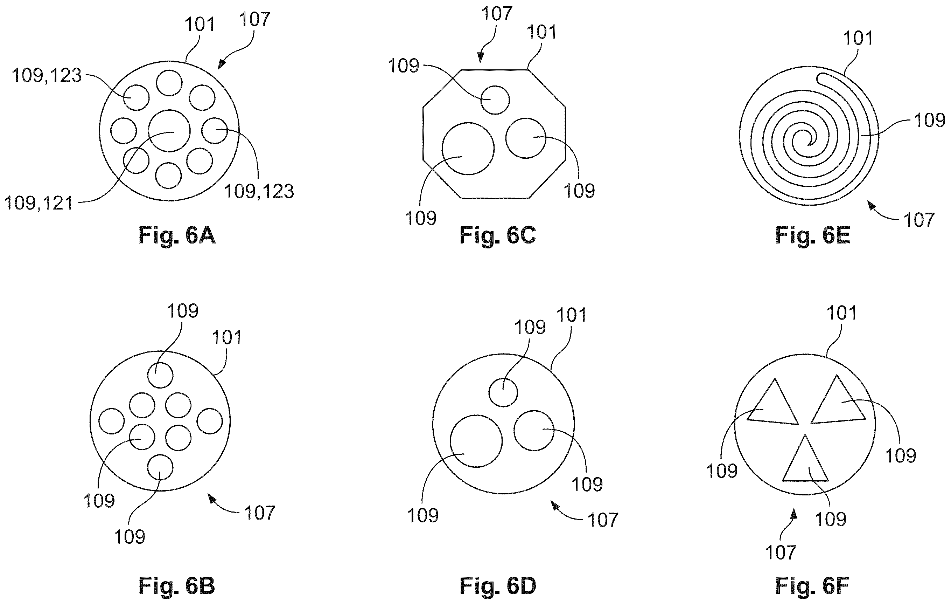

Figure 6 shows several schematic sectional illustrations of an aluminium busbar unit 100 according to several embodiments.

Various embodiments of the busbar body 101 and in particular of the cavity structure 107 are illustrated in diagrams a) to f). For this purpose, Figure 6 shows schematic frontal sectional views of the various embodiments of the busbar body 101.

The embodiment of diagram a) is based on the embodiments of Figures 1 to 4 and shows a cavity structure 107 with a central through channel 121 and a plurality of peripheral cavities 123 which are arranged encircling the central through channel 121.

However, in a departure from the embodiments of Figures 1 to 4, in the embodiment shown all of the cavities 109 illustrated each have a circular cross section.

The cavity structure of diagram b) in turn shows a plurality of cavities 109. The cavities 109 here each have circular and identically sized cross sections and are arranged in a symmetrical cross arrangement.

In diagrams c) and d), the respectively illustrated cavity structure 107 in turn has a plurality of cavities 109 with circular cross sections. In the embodiments shown, the various cavities 109 each have differently sized cross sections. Furthermore, the cavities 109 illustrated are arranged in an asymmetrical arrangement within the busbar body 101.

In a departure from the embodiments of diagrams a), b), d), e) and f), in which the busbar body 101 in each case has a circular cross section, in the embodiment of diagram c) the busbar body 101 has an octagonal cross section. As an alternative thereto, the busbar body 101 can also have a differently configured polygonal cross section.

In the embodiment of diagram e), the cavity structure 107 has just one cavity 109. The cavity 109 here has a spiral cross section.

Diagram f) shows a cavity structure with a plurality of cavities 109 arranged around the centre of the busbar body 101. Each cavity 109 here has a triangular cross section of identical size.

As an alternative to the embodiments shown, the cavities 109 may have an elliptical cross section or a polygonal cross section designed in any other way.

The design or arrangement of the various cavities 109 of the cavity structure 107 can be undertaken here depending on the respective application and taking into account filling of the cavity structure 107 with the coolant mentioned. Depending on the respective application of the busbar unit 100, the respective cavity structure 107 can be configured with respect to a preferred rigidity of the busbar body 101 and/or with respect to an optimized cooling effect of the coolant arranged in the cavities 109 of the cavity structure 107.

The cavity structure 107 here can have a volume which takes up 30 to 70 % of the volume of the entire busbar body 101.

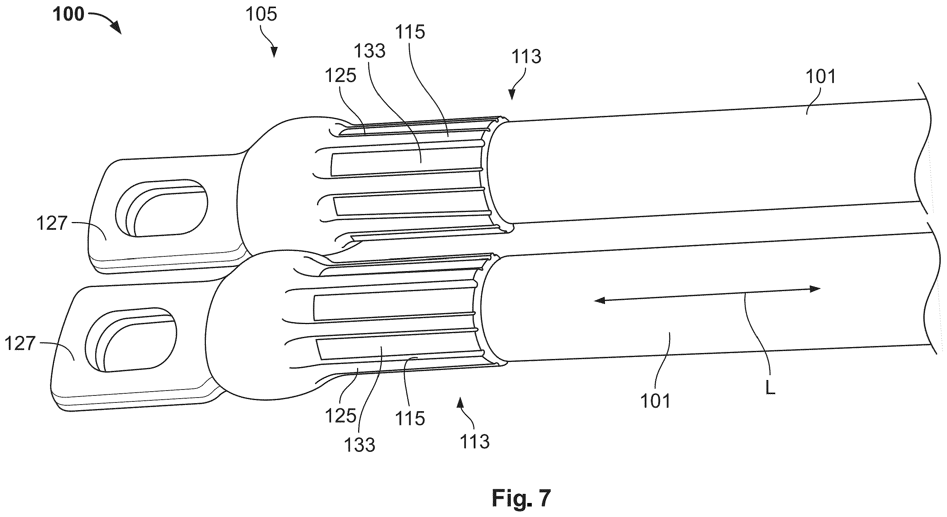

Figure 7 shows a perspective schematic illustration of two aluminium busbar units 100 according to one embodiment.

Figure 7 illustrates two aluminium busbar units 100 according to the present invention in an assembled state. At the connecting end 113, the connecting units 105 are each fixed to the busbar body 101 by means of the press connection 115. In the embodiment shown, the press connection 115 is designed as a segmented radial crimping connection. The receiving sleeves 125 here have grooved regions 133 brought about by the mechanical pressurization during the crimping process.

### List of reference signs

- 100: Busbar unit
- 101: Busbar body
- 103: Stabilization structure
- 105: Connecting unit
- 107: Cavity structure
- 109: Cavity
- 111: Insertion element
- 113: Connecting end
- 115: Crimping connection
- 117: Head structure
- 119: End surface
- 121: Central through channel
- 123: Peripheral cavity
- 125: Receiving sleeve
- 127: Coupling element
- 129: Central insertion element
- 131: Peripheral insertion element
- 133: Grooved region

- L: Longitudinal axis
- D1: Diameter of the busbar body
- D2: Diameter of the cavity
- D3: Diameter of the busbar body

## Claims

1. Aluminium busbar unit (100) for current transmission, comprising a busbar body (101), a stabilization structure (103) and a connecting unit (105) for the electrical and mechanical connection of the busbar unit (100), wherein the busbar body (101) comprises a cavity structure (107) with at least one cavity (109), wherein the stabilization structure (103) comprises at least one insertion element (111) which is at least partially inserted into the at least one cavity (109), wherein the stabilization structure (103) has a mechanical rigidity at least of equal magnitude to the busbar body (101), and wherein the connecting unit (105) axially overlaps the stabilization structure (103) at a connecting end (113) of the busbar body (101) and is secured by means of a press connection (115).

2. Busbar unit (100) according to Claim 1, wherein the cavity structure (107) comprises a plurality of cavities (109).

3. Busbar unit (100) according to Claim 2, wherein the stabilization structure (103) comprises a plurality of insertion elements (111).

4. Busbar unit (100) according to Claim 3, wherein an insertion element (111) is arranged in each of the cavities (109) of the cavity structure (107).

5. Busbar unit (100) according to any one of the preceding claims, wherein the cavity structure (107) comprises a through channel (121) and a plurality of peripheral cavities (123) arranged radially at least partially around the through channel (121).

6. Busbar unit (100) according to Claim 5, wherein the peripheral cavities (123) at the connecting end (113) of the busbar body (101) are at least partially plastically deformed by the press connection (115), and wherein the peripheral cavities (123) are at least partially fluidically closed by the plastic deformation, and/or wherein the at least one insertion element (111) is inserted into the through channel (121).

7. Busbar unit (100) according to any one of the preceding Claims 5 to 7, wherein the through channel (121) is formed centrally in the busbar body (101).

8. Busbar unit (100) according to any one of the preceding Claims 5 to 8, wherein the through channel (121) has a larger cross section than the peripheral cavities (123).

9. Busbar unit (100) according to any one of the preceding claims, wherein the at least one cavity (109) has a cross section of the following shape: circular shape, elliptical shape, triangular shape, polygonal shape, and/or wherein a cross section of the at least one insertion element (111) has an identical shape and/or size to the cross section of the at least one cavity (109), and/or wherein the at least one insertion element (111) is bar-shaped.

10. Busbar unit (100) according to any one of the preceding claims, wherein the stabilization structure (103) comprises a head structure (117) connected to the at least one insertion element (111), wherein a diameter of the head structure (117) is larger than the diameter of the at least one insertion element (111), and/or wherein the head structure (117) lies against an end surface (119) of the connecting end (113) of the busbar body (101), and/or wherein the stabilization structure (103) at least partially fluidically closes the connecting end (113) of the busbar body (101), and/or wherein the stabilization structure (103) is manufactured from an electrically conductive material.

11. Busbar unit (100) according to any one of the preceding Claims 1 to 14, wherein the stabilization structure (103) is manufactured from a plastic and by a 3D printing method.

12. Busbar unit (100) according to any one of the preceding claims, wherein a coolant for cooling the busbar body (101) is formed in the at least one cavity (109) of the cavity structure (107), and wherein the coolant is in the form of a phase change storage material.

13. Busbar unit (100) according to any one of the preceding claims, wherein the press connection (115) is in the form of a crimping connection (115), and/or wherein the press connection (115) is brought about by an EMPT (electromagnetic pulse technology) method, and/or wherein the connecting unit (105) comprises a receiving sleeve (125), wherein the receiving sleeve (125) is arranged around the connecting end (113) of the busbar body (101), and wherein the stabilization structure (103) is held in the cavity structure (107) by the receiving sleeve (125), and/or wherein the receiving sleeve (125) closes the connecting end (113) of the busbar body (101) fluid-tightly with the cavity structure (107), and/or wherein the connecting unit (105) is in the form of a cable shoe, and/or wherein the connecting unit (105) is manufactured from copper, and/or wherein the stabilization structure (107) is manufactured from copper or steel, and/or wherein the receiving sleeve (125) has two oppositely open ends, and wherein the fluid-tight closing of the busbar body (101) is brought about via the head structure (117) of the stabilization structure (103).

14. Method for manufacturing a busbar unit (100) according to any one of the preceding Claims 1 to 24, comprising:
providing a busbar body (101) with a cavity structure (107) and a stabilization structure (103);
inserting at least one insertion element (111) of the stabilization structure (103) into at least one cavity (109) of the cavity structure (107);
axially covering a connecting end (113) of the busbar body (101) by a connecting unit (105); and
securing the connecting unit (105) to the busbar body (101) via a press connection.

15. Method according to Claim 14, wherein the press connection is in the form of a crimping connection (115), and/or wherein the press connection (115) is brought about by an EMPT (electromagnetic pulse technology) method, and/or wherein the method furthermore comprises:
filling the at least one cavity (109) with a phase change material, and/or the busbar body (101) being fluidically closed by the connecting unit.
